# EUROPEAN PATENT APPLICATION

(11) **EP 4 201 556 A1**
(43) Date of publication of application: **28.06.2023**
(21) Application number: 21020651.2
(22) Date of filing: 22.12.2021
(51) Int. Cl.: B22F 10/28, B22F 10/31, B22F 12/90, B29C 64/371, B29C 64/393, B33Y 10/00, B33Y 30/00, B33Y 40/00, B33Y 50/02

(54) **A METHOD OF CONTROLLING A GAS ENVIRONMENT IN A MANUFACTURING SPACE PRIOR TO COMMENCING AN ADDITIVE MANUFACTURING PROCESS**

(71) Applicant: Linde GmbH, 82049 Pullach (DE)
(72) Inventor: Miklos, Ernst, 82049 Pullach (DE); Seys, Michael, 82049 Pullach (DE); Bauer, Dominik, 82049 Pullach (DE); Cheikh rouhou, Amal, 82049 Pullach (DE)
(74) Representative: Gellner, Bernd

(57) **Abstract**

A method of controlling a gas environment in a manufacturing space prior to commencing an additive manufacturing (AM) process, comprising: providing a source of a process gas (201);- detecting an amount of a process gas in the source;- receiving information from an AM apparatus (1) about a predetermined threshold value required to complete manufacturing of a component;- determining whether or not the amount of the process gas in the source exceeds the predetermined threshold value; and if the detected amount of the process gas in the source exceeds the predetermined threshold value, supplying the source of the process gas into the AM apparatus; and if the detected amount of the process gas in the source is less than or equal to the predetermined threshold value, providing information on a required amount of the process gas to complete manufacturing of the component.

## Description

The present invention relates to a method of controlling a gas environment in a manufacturing space prior to commencing an additive manufacturing (AM) process, in particular a method and an apparatus for reducing waste components produced by additive manufacturing (AM), particularly, but not exclusively, products made by laser powder bed fusion (L-PBF).

In general additive manufacturing is a manufacturing technology that includes a methodology whereby an energy source melts a feedstock of material which is deposited onto a substrate. Computer control of the movement of the energy source, and the source of the feedstock, makes it possible to build complex components. In additive manufacturing the processing is not limited to the above-mentioned methods in which metal powders are processed but composites or polymers are processed. The energy source can include (but is not limited to) the already mentioned laser beam or electron beam, an arc, or other plasma-based energy sources.

The main differences between processes for AM are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), while others cure liquid materials using different sophisticated technologies.

By nature of the L-PBF process, the component is built in a chamber with controlled gas atmosphere in a layer-by-layer sequence. The energy for melting and joining the powder particles is provided by a laser beam. Size of powder particles and diameter of focused laser beam decide on layer thickness, which usually ranges between 0,025 - 0,06 mm. A large number of subsequent layers is necessary to obtain a component, e,g, for a 3 cm high part there would be required approx. 1000 layers of 30 µm individual layers.

Usually, it is recommended not to interrupt a print job once started. Interruptions of a continuous build job can lead to defects in the part, or even scraping the partly built part, with all the disadvantages of a subsequent need to restart from zero. As such, job interruptions are causing additional labour and machine cost, waste of energy and material.

The quality of the produced component depends on the quality of the single joining points between the powder particles, which again is influenced, among others, by the reproducible gas atmosphere in the chamber. To ensure such high quality and stable process gas quality, several measurements strategies are applied, and gas is added to the chamber in a controlled way. When using metallic powders, usually, but not limited to, inert gases like argon, helium or mixtures thereof are used. For polymers, nitrogen is most used.

The above-mentioned measuring strategies are monitoring mainly O2 content, either in the chamber directly, or in the peripheric gas circulation systems. "Fresh", pure gases are added to the chamber to maintain the O2 contamination below a pre-set value, which depends on materials used. Gas supply can be sourced from single cylinders with pressure regulators, manifolded cylinders, bundles with single gas regulators, manifolded bundles or from cryogenic tanks storing liquid argon or liquid nitrogen.

If for any reason the gas supply of the machine is interrupted, the consequences will depend on the machine control programmes:
a - Machines which only provide alerts for chamber gas failures would sense the increase in O2, and alert optically or acoustically, that something is wrong with the gas in the chamber. But the build job would be continued with a contaminated process gas, finally delivering a failure component, probably scrapped later.
b - More sophisticated machines which are programmed to stop a print job once the gas conditions in the chamber are not adequate, would react with job disruption. In the most favourable way, the job could be resumed once the gas atmosphere is again "ok", but with additional programming and operator intervention. In the worst case, when a long-time printing job stops during the night and there is no operator to change the gas cylinders/bundles. In this case, the atmosphere inside the printer will be contaminated and the cooling of the partially built parts will cause shrink lines and potential mechanical defects when the job resumes.

It is therefore an object of the present invention to provide a method and a device for producing a component by additive manufacture that at least partially mitigates the problems described above.

One or more of these problems are solved by a method according to independent claim 1. Advantageous embodiments are defined in the sub-claims.

According to an aspect of the present invention there is provided a method of controlling a gas environment in a manufacturing space prior to commencing an AM process, comprising:
- providing a source of a process gas;
- detecting an amount of a process gas in the source;
- receiving information from an AM apparatus about a predetermined threshold value required to complete manufacturing of a component;
- determining whether or not the amount of the process gas in the source exceeds the predetermined threshold value; and
if the detected amount of the process gas exceeds the predetermined threshold value, supplying the source of the process gas into the AM apparatus; and if the detected amount of the process gas in the source is less than or equal to the predetermined threshold value, providing information on a required amount of the process gas to complete manufacturing of the component.

Advantageously, the method allows to avoid waste parts that are normally caused by job interruptions by estimating the amount of gas required to complete the printing process and comparing it with the amount of gas present in the gas source. The printing process is not commenced if the amount of gas present in the source is below the predetermined threshold. The printing process is only allowed to initiate when the amount of gas is sufficient to complete the printing job. Thus, the risk of a shortage of gas during printing is eliminated. Furthermore, if the amount of gas is insufficient, it is possible to adjust the supply before commencing printing, thus avoiding undesired interruption of the printing process.

The term "information on a required amount of the process gas to complete the process" is not limited to only information on how much gas is missing to complete the process. On the contrary, that information can be any that comments on the amount of gas that is needed to complete the job, e.g. that the amount of gas is merely insufficient rather than a particular required volume. For example, the term "information on a required amount of the process gas to complete manufacturing of the component" can include the following:
- issuing a "insufficient amount of gas" audio and/or visual warning;
- providing information in units of whole cylinders/bundles;
- providing information in m³ or any usual operating units used.

In an embodiment, the process gas comprises any one of helium, argon, nitrogen, hydrogen, or a mixture thereof. Advantageously, by using various gases and/or their mixtures it is possible to create an optimal inert atmosphere with the most suitable characteristics that are tailored to the material that is used to manufacture the part.

In another embodiment, the source of the process gas comprises a single cylinder, a manifold cylinder, a bundle thereof, or manifolded bundles. Advantageously, this allows to supply enough gas for the plurality of printers, or to provide different gases to create gas mixtures *in-situ.*

In yet another embodiment, the source of process gas comprises at least one sensor. The presence of at least one sensor allows information to be received on the quantity and quality of the process gas before feeding the gas into the printing apparatus.

In an embodiment, the at least one sensor is configured to detect the amount of the process gas in the source. Optionally, the at least one sensor is a pressure sensor. Advantageously, it allows for better pressure monitoring inside the gas source and allows for further indication of low pressure in the system.

In an embodiment, the at least one sensor is configured to detect a quality characteristic, such as concentration of specific components or contaminations in the process gas in the source. In another embodiment, the at least one sensor is a moisture sensor. Advantageously, the presence of the moisture sensor allows estimation of the quality of the process gas, such as the presence of contaminants, and, in turn, better control of the quality of the gas used during printing.

In yet another embodiment, the information from the at least one sensor is communicated to the AM apparatus via a processor module. Advantageously, this allows conversion of the output pressure signal and feeds the resultant information to the software of the AM apparatus.

In an embodiment, the processor module is external to the AM apparatus. Advantageously, this allows use of signal processing techniques outside the AM apparatus. This is important when the providers of the printing apparatuses are not inclined to modify the printing hardware, or software, or both. The use of the external processor module is employed for converting the pressure (or moisture content) into a current or voltage before further processing of the signal outside the AM apparatus.

In another embodiment, the processor module is built into the AM apparatus. Advantageously, this allows minimization of the amount of additional external parts used in the printing process by employing the built-in processor that is already used for controlling the printing process. In this case, the existing software is modified to receive and convert the signals from the pressure and/or moisture sensors and use the received data in the gas amount estimation algorithm. Furthermore, advantageously, the presence of a controller that is capable of simultaneously controlling the manufacturing process, and the process of controlling a gas environment in a manufacturing space prior to commencing an AM process allows for a more efficient and cost-effective method of producing the components by means of the L-PBF technique.

In an embodiment, the component is manufactured using a metal source or a polymer source. Advantageously, by using a metal or a polymer as a source, it is possible to manufacture various parts with the required physico-chemical characteristics, such as water solubility, hardness, density, ductility etc.

In another embodiment, when the process gas is formed of a plurality of gases, the plurality of gases are mixed to form the process gas by a mixer, and the mixer is located between the sources of the plurality of gases and the sensor. Advantageously, it allows to provide a homogeneous mixture of different gases prior to commencing printing process. The presence of a mixture of gases rather than a single component process gas can be required depending on the materials the component is manufactured from.

According to another aspect of the invention, there is provided a method of manufacturing a component in an AM apparatus comprising:
- controlling a gas environment in a manufacturing space as described herein above;
- providing a metal powder on a build platform,
- melting a portion of the metal powder with an energy source, and
- repeating the aforementioned steps.

According to another aspect of the invention, there is provided a system for manufacturing an AM component comprising:
- an AM apparatus, wherein the AM apparatus further comprises:
- a manufacturing space;
- an energy source;
- a source of a feedstock material;
- a source of process gas;
- a controller, wherein the controller is arranged to control a gas environment in a manufacturing space prior to commencing an additive manufacturing (AM) process as described herein above.

The method and apparatus are shown in relation to the enclosed figures, in which:
- Figure 1: shows a rough schematic view of an apparatus for powder bed additive manufacturing by L-PBF;
- Figure 2: shows a rough schematic view of an exemplary apparatus for controlling a gas environment in a manufacturing space prior to commencing an AM process;
- Figure 3: shows a rough schematic view of another exemplary apparatus for controlling a gas environment in a manufacturing space prior to commencing an AM process;
- Figure 4: shows a flow chart illustrating a method of manufacturing a component in an embodiment of the present invention.

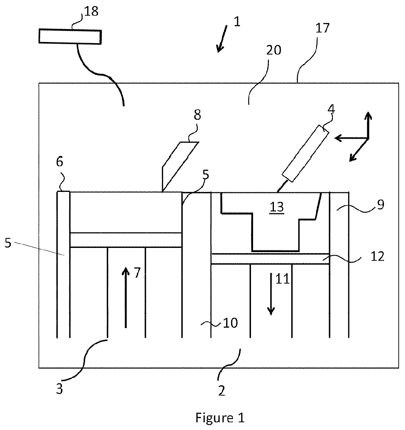

Figure 1 shows an apparatus for additive manufacturing 1 according to an embodiment of the present invention.

The apparatus 1 comprises a production cylinder 2, a delivery cylinder 3 and an energy source 4.

The energy source 4 according to a preferred embodiment comprises a laser beam and a corresponding scanner system for melting/sintering metal powder (not shown). However, other energy sources, such as an electron beam in combination with a scanning system, are also possible.

The delivery cylinder 3 comprises a housing 5 with a wall 6 wherein a powder delivery piston 7 is disposed inside the housing 5.

A powder applying device 8, for example a roller, is provided for pushing a metal powder from the delivery cylinder 3 to the production cylinder 2.

The production cylinder 3 comprises a housing 9 with a wall 10.

A lift table 11 with a build platform 12 is disposed inside the wall 10 of the housing 9. The lift table 11 and the corresponding built platform 12 embody a fabrication piston.

The wall 10 of the housing 9 and the built platform 12 of the lift table 11 of the production cylinder 2 define a build space 13.

The build space 13 houses the fabrication powder bed and therefore the object being fabricated.

The build platform 12 can be an integral part of the lift table 11 of the fabrication piston or a separate part connected to the lift table 11.

Furthermore, a processing chamber 17 is provided surrounding the production cylinder 2, the delivery cylinder 3 and the energy source 4.

The manufacturing space 20 according to the present invention is therefore the build space 13 of the production cylinder 2 defined by the wall 10 of the housing 9 of the production cylinder 2 and the lift table 11 with the build platform 12 disposed inside the wall 10 of the housing 9, and/or the manufacturing space is the room within the processing chamber 17.

The apparatus 1 may be used to produce parts by L-PBF in the conventional way. The laser 4 may be controlled to heat the platform 12 with a first layer of powder (having a thickness in the range of 120 µm) to a predetermined temperature at which the process is to take place. This temperature can be below the melting point of the powder, but is high enough to cause weak sintering of the powder (in the case of Selective Laser Sintering (SLS)). Optionally, the laser fully melts the powder rather than sintering it (in the case of Selective Laser Melting (SLM)) For example, the predetermined temperature may be as high as 1000°C or more. The scanner system then controls the laser 4 to further heat selected portions of the first layer of powder so as to melt these portions. A further layer of powder is then applied on top of the powder bed, and the laser 4 is then controlled to first heat the further layer of powder to the predetermined temperature, and then to further heat selected regions so as to melt the selected regions. The process is repeated until all of the parts of the component that are required to be fused have been melted by the laser 4. At this point, formation of the part is complete.

The sintering/melting process occurs in a gaseous atmosphere under "controlled vacuum" conditions. For example, the process may take place in an Argon atmosphere at a pressure that is preferably in the range of 1x10⁻³ mbar and 5x10⁻³ mbar. However, other vacuum ranges are also anticipated. Also, other inert gases can be used, for example Helium, Nitrogen, Carbon dioxide, carbon monoxide, or mixtures thereof.

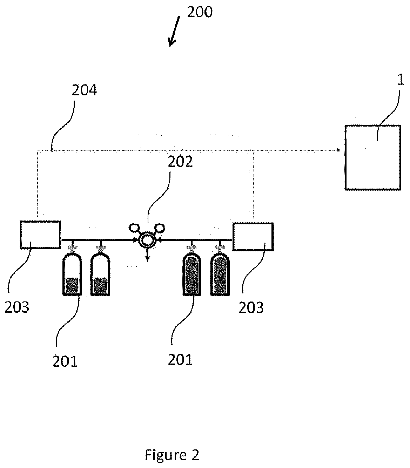

Figure 2 shows a rough schematic representation of an exemplary apparatus 200 for controlling a gas environment in a manufacturing space prior to commencing an AM process.

According to this embodiment, there is provided an AM apparatus 1 as described above and shown in figure 1. It is understood that it can be any AM apparatus that employs a powder bed technology and any energy source. In an exemplary embodiment, the energy source can be a laser beam. The apparatus 1 is configured to manufacture the parts from a material source. The material source can be a metal source or a polymer source. The choice of the material source is decided on the manufacturing requirements for the part to be produced. The apparatus 1 is connected to a gas supply 201 (connections not shown). The gas supply provides a process gas to the AM apparatus 1. The process gas can be without limitation argon (Ar), helium (He), nitrogen (N2) or mixtures thereof. In the preferred embodiment, Ar and/or He, or their mixtures, are used. In another embodiment, when the polymer source is used, the preferred gas is N2. However, combinations of the above-mentioned gases can equally be employed.

The gas source 201 can be any of the following: a single cylinder, a manifold cylinder, a bundle thereof, or a manifolded bundle. The gas source 201 is connected to a regulator 202. The regulator 202 is configured to control and regulate the supply of gas into the AM apparatus 1. The regulator 202 can be without limitation: a bull nose regulator, clip on regulator, a bolt on regulator, or a changeover gas regulator. Any of these regulators can be suitable for high gas pressure and low gas pressure.

The source of process gas can be connected to an at least one sensor 203. In an exemplary embodiment, the sensor 203 can be a pressure sensor. The pressure sensor 203 can be without limitation a strain gauge sensor, or a variable capacitance sensor. The pressure sensor is configured to provide the pressure information 204 to the controller (not shown) of the AM apparatus 1. This can be done by means of any suitable connection known and available to the skilled person, including but not limited to a wired connection, a wireless connection, local area network connection, wide area network connection, cloud connection services, other remote communication methods, Ethernet cable, and/or Bluetooth^{™}. It will be apparent to the skilled person that any connection means is suitable provided that the selected connection means fulfils the function of allowing the pressure sensor to provide the pressure information to the controller.

It is understood by the skilled person that when a mixture of gases is required to manufacture the component, a mixer (not shown) can be provided between the gas source 201 and the at least one sensor 203. The purpose of the mixer is to mix the at least two different gases from the gas source and to provide a homogeneous mixture before it enters the manufacturing space.

In use, the at least one pressure sensor 203 evaluates the pressure inside at least one of the cylinders in the gas source 201, estimates the amount of the gas and sends the information about the remaining gas to the built-in controller of the AM apparatus 1. The controller then applies an algorithm that evaluates whether the amount of gas is sufficient to perform and complete the printing job. If the amount of gas is sufficient, the controller commences printing. If the amount of gas is not sufficient, the controller outputs and displays the information on the amount of gas (number of cylinders or the gas flow, for example) required to complete the job. The printing process only commences when the amount of the process gas in a single cylinder or the bundle thereof is sufficient.

The sufficiency of the process gas is estimated as follows: the amount of gas in the gas source 201 > (more than) the amount of gas required to complete printing. In the other words, the predetermined threshold value is set by the controller that corresponds to the amount of gas needed to complete the printing job. If the amount of the process gas exceeds the threshold, the controller is configured to commence printing. If the amount of the gas in the source 201 is ≤ (less or equal to) the amount of gas required to complete the printing, the printing will not start until the source of gas is replenished.

The term "information on a required amount of the process gas to complete manufacturing of the component" can, for example, include the following:
- issuing a "insufficient amount of gas" audio and/or visual warning;
- providing information in units of whole cylinders/bundles;
- providing information in m³ or any usual operating units used.

Optionally, the at least one sensor 203 of the system 200 may further comprise at least one moisture sensor. The moisture sensor is configured to measure the amount of moisture in the process gas and is therefore used to evaluate quality of the supplied gas. Optionally, the moisture sensor is configured to detect whether the concentration of the components or contaminants exceeds the pre-determined threshold and notify the user of the AM apparatus whether the threshold is exceeded. The information on the quality (purity) of the process gas is used to estimate material compatibility and document the quality of the printing job. This information can also be useful in the calculation of the amount of gas required to complete the printing job, by taking into account the impurities present in the process gas.

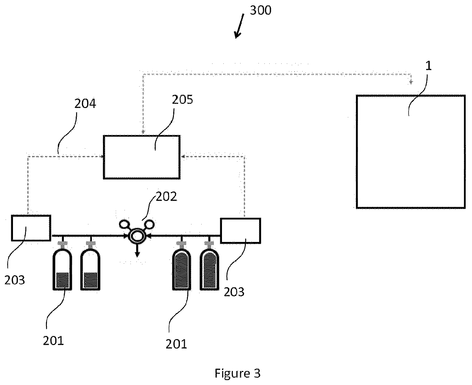

Figure 3 shows a schematic representation of another exemplary apparatus 300 for controlling a gas environment in a manufacturing space prior to commencing an AM process. The reference numerals in Figure 3 are the same as described in Figures 1 and 2 and it is therefore understood that the elements with like-wise references perform substantially the same function.

The system 300 further comprises an external processing module 205. The processing module 205 is configured to receive the information from the sensors 203 and to feed the information on the amount of the process gas into the software of the AM apparatus 1. This embodiment can be employed when the AM apparatus manufacturer does not change the hardware and/or software of the AM apparatus 1. In this case the external processor module will perform the function of calculating the difference between the amount of process gas as received from the sensors 203 and the amount of gas required to complete the printing job.

It is understood that the AM apparatus 1 is not limited to one printer and a plurality of printers can be employed to perform the printing job(s) simultaneously. Both exemplary embodiments as described with reference to Figures 2 and 3 can employ a plurality of printers as part of the AM apparatus 1. The same algorithm of estimating the sufficiency of the process gas to complete the job(s) is applied.

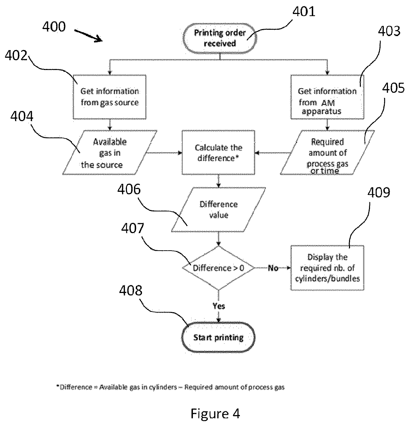

A method of controlling a gas environment in a manufacturing space prior to commencing an AM process will be described in more detail below, with respect to Figure 4.

Figure 4 shows a method 400 which is implemented by a controller. The controller can be either a processor module external to the AM apparatus, or a processor module built internally into the AM apparatus, as described above in more detail.

In step 401 the controller is arranged to receive a printing order. The printing order can be input manually by an operator, or automatically, using any suitable printing software. After the printing order has been received, the controller receives the information from the gas source 402 and from the AM apparatus 403. The information from the gas source comprises the amount of gas available in the cylinder(s) 404. It is understood that the information on the amount of gas is provided from the sensors. The information from the AM apparatus comprises the information on the required amount of the process gas 405 and/or time required to complete the printing job. The amount of gas required to complete the manufacturing of the component is defined by the shape, size and material of the component. If the amount of time is provided then, knowing the consumption of the gas by the AM apparatus, a dedicated algorithm calculates the amount of the process gas required to complete the printing job.

As the next step 406, the controller is then arranged to calculate the difference between the amount of gas that is available in the cylinder(s) and the required amount of gas. The controller then outputs the difference value 407. If the difference value > 0, the controller is arranged to initiate printing process 408 by supplying the provided gas into the printing apparatus. If, however, the value is equal to or <0, the controller is then arranged to output the amount of gas required to complete manufacturing of the component, at the step 409 by way of a communication to the operator. Optionally, the operator is then informed by means of visual/audio- or audio-visual alarm signal that the amount of gas required for producing the component needs to be adjusted prior to commencing the printing process.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

### Refernce signs

- 1: device
- 2: production cylinder
- 3: delivery cylinder
- 4: energy source
- 5: housing
- 6: wall
- 7: powder delivery piston
- 8: powder applying device
- 9: housing
- 10: wall
- 11: lift table
- 12: built platform
- 13: build space
- 17: processing chamber
- 20: manufacturing space
- 201: source of gas
- 202: regulator
- 203: sensor
- 204: cabled/wireless connection
- 205: external processor module

## Claims

1. A method of controlling a gas environment in a manufacturing space prior to commencing an additive manufacturing (AM) process, comprising:
- providing a source of a process gas (201);
- detecting an amount of a process gas in the source;
- receiving information from an AM apparatus (1) about a predetermined threshold value required to complete manufacturing of a component;
- determining whether or not the amount of the process gas in the source exceeds the predetermined threshold value; and
if the detected amount of the process gas in the source exceeds the predetermined threshold value, supplying the source of the process gas into the AM apparatus; and
if the detected amount of the process gas in the source is less than or equal to the predetermined threshold value, providing information on a required amount of the process gas to complete manufacturing of the component.

2. The method as claimed in claim 1, wherein the process gas comprises any one of helium, argon, nitrogen, hydrogen, or a mixture thereof.

3. The method of claim 1, wherein the source of the process gas comprises a single cylinder, a manifold cylinder, a bundle thereof, or a bundle of manifolded cylinders.

4. The method of any preceding claim, wherein the source of process gas comprises at least one sensor (204).

5. The method of claim 4, wherein the at least one sensor (204) is configured to detect the amount of the process gas in the source.

6. The method of claim 5, wherein the at least one sensor (204) is a pressure sensor.

7. The method of claim 4, wherein the at least one sensor (204) is configured to detect a quality characteristic, such as a concentration of components of the process gas or a concentration of contaminants in the source.

8. The method of claim 7, wherein the at least one sensor is configured to quantify the quality characteristic, such as the concentration of specific components or the concentration of contaminants of the process gas in the source.

9. The method of claim 7 or claim 8, wherein the at least one sensor (204) is a moisture sensor.

10. The method of claim 4, wherein the information from the at least one sensor is communicated to the AM apparatus via a processor module (205).

11. The method of claim 10, wherein the processor module (205) is external to the AM apparatus.

12. The method of claim 10, wherein the processor module (205) is built into the AM apparatus.

13. The method of claim 1 wherein the component is manufactured using a metal source or a polymer source.

14. The method of claim 4, wherein the process gas is formed of a plurality of gases, the plurality of gases are mixed to form the process gas by a mixer, and wherein the mixer is located between the source of the plurality of gases and the sensor.

15. A method of manufacturing a component in an AM apparatus comprising:
- controlling a gas environment in a manufacturing space as claimed in claims 1-13;
- providing a metal powder on a build platform (12),
- melting a portion of the metal powder with an energy source (4), and
- repeating the aforementioned steps.

16. A system for manufacturing an AM component comprising:
- an AM apparatus (1), wherein the AM apparatus further comprises:
- a manufacturing space (20);
- an energy source (4);
- a source of a feedstock material;
- a source of process gas (201);
- a controller, wherein the controller is arranged to control a gas environment in a manufacturing space (20) prior to commencing an additive manufacturing (AM) process as claimed in claims 1-13.
